# EUROPÄISCHE PATENTSCHRIFT

(11) **EP 1 705 155 B1**
(45) Veröffentlichungstag und Bekanntmachung des Hinweises auf die Patenterteilung: **03.10.2007**
(21) Anmeldenummer: 05006425.2
(22) Anmeldetag: 23.03.2005
(51) Int. Cl.: C02F 1/38, C02F 1/44, B08B 3/14

(54) **Verfahren und Vorrichtung zum Aufbereiten von bei der Lebensmittelherstellung insbesondere in Brauereien anfallenden verunreinigten Reinigungslaugen**
Process and device for the treatment of wastewater from food processing, especially washing fluids from breweries
Procédé et dispositif pour le traitement des eaux usées dans les industries alimentaires, en particulier des fluides de lavage dans les brasseries

(43) Veröffentlichungstag der Anmeldung: 27.09.2006
(73) Patentinhaber: KRONES Aktiengesellschaft, 93073 Neutraubling (DE)
(72) Erfinder: STIPPLER, Kurt Dr., D-85417 Marzling (DE); WASMUHT, Klaus, D-91792 Ellingen (DE); STUMPE, Cornelia, D-85356 Freising (DE)
(74) Vertreter: Grünecker, Kinkeldey, Stockmair & Schwanhäusser Anwaltssozietät

(56) Entgegenhaltungen:
- EP-A- 0 815 961
- DE-A1- 19 741 546
- US-A1- 2003 205 514
- RÖGENER F, MAVROV V, CHMIEL H: "Aufarbeitung des Nachspülwassers von Flaschenwaschmaschinen mittels Membranfiltration mit dem Ziel der Wiederverwendung" CHEMIE INGENIEUR TECHNIK, Bd. 74, Nr. 4, 2002, Seiten 517-524, XP002333084 WEINHEIM, DE
- SCHARNAGL N ET AL: "Recycling of washing waters from bottle cleaning machines using membranes" DESALINATION, ELSEVIER, AMSTERDAM, NL, Bd. 131, Nr. 1-3, 20. Dezember 2000 (2000-12-20), Seiten 55-63, XP004306338 ISSN: 0011-9164
- BRAEKEN L ET AL: "Regeneration of brewery waste water using nanofiltration" WATER RESEARCH, PERGAMON PRESS, OXFORD, GB, Bd. 38, Nr. 13, Juli 2004 (2004-07), Seiten 3075-3082, XP004521287 ISSN: 0043-1354

## Beschreibung

Die Erfindung betrifft ein Verfahren und eine Vorrichtung zum Aufbereiten von bei der Lebensmittelherstellung insbesondere in Brauereien anfallenden verunreinigten Reinigungslaugen gemäß den Oberbegriffen der Patentansprüche 1 und 9 sowie eine entsprechende Flaschenreinigungsanlage.

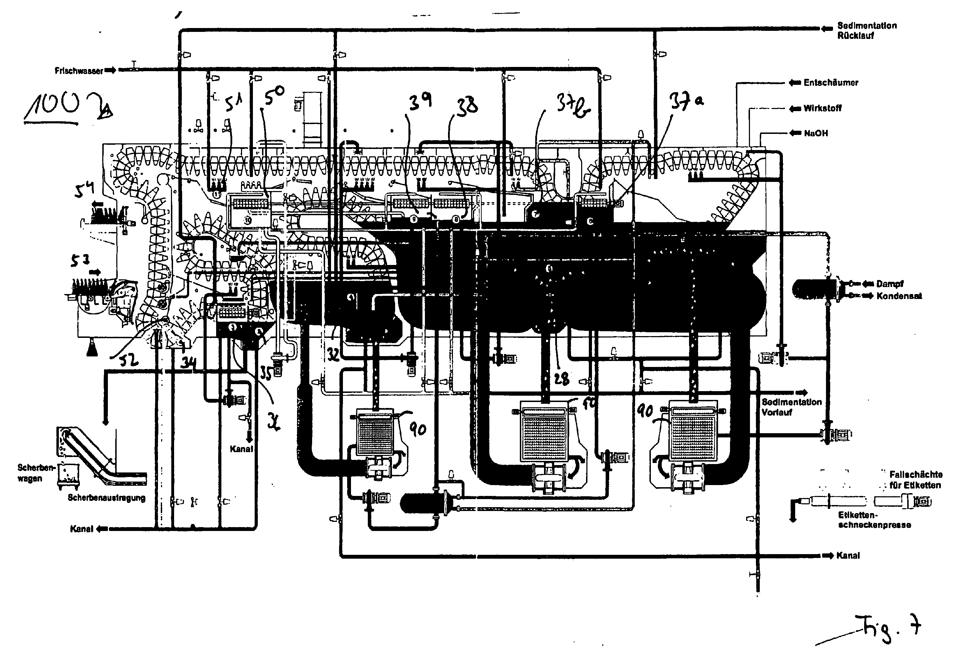

Die Sudgefäßreinigung ebenso wie die Flaschenreinigung erfolgen mit Hilfe von Reinigungslaugen. Flaschen werden beispielsweise mit einer Flaschenreinigungsanlage, wie sie in der Fig. 7 dargestellt ist, gereinigt. Derartige Flaschenreinigungsanlagen umfassen, wie später noch ausführlich beschrieben wird, ein Vorlaugebad 32, ein Hauptlaugebad 28 sowie ein Nachlaugebad 37. Bei der Flaschenreinigung verschlechtert sich jedoch der Zustand der Reinigungslauge trotz Zuschärfung, weil sich immer mehr Schlamm absetzt und lösliche, unlösliche oder kolloidgelöste Bestandteile in der Lauge enthalten sind. Dazu gehören unter anderem Papierfasern von zerfaserten Etiketten, Farbpigmente, Bindemittel aus den Etiketten, Nassfestmittel, Leimungsmittel, ausgefällter Schlamm von Kalkbestandteilen, anhaftender Schmutz aus Flaschen, etc. Bei der Reinigung von Sudhausgefäßen fallen unter anderem größere Treber und Trubrestmengen an.

Die Aufbereitung der entsprechenden Reinigungslaugen erfolgt heute in zunehmendem Maße durch Filtration mittels Ultra- oder Nanofilter (vgl. z.B. die Offenlegungsschrift DE 19741546). Die Filtration ist, insbesondere in Anbetracht der ständig steigenden Preise, für belastete Abwässer die modernste Form der Reinigung. Wenn man die Lauge in derartiger Weise aufbereitet und ständig schärft, kann man sie längere Zeit ohne Laugenwechsel nutzen. Bei den im Stand der Technik verwendeten Laugenreinigungsanlagen ergibt sich jedoch das Problem, dass durch die Filterflächen, insbesondere durch die großen Mengen an Verunreinigungen, wie beispielsweise Papierfasern von Etikettenresten, Treber und Trubreste, zusetzen. Derartige Laugenreinigungsanlagen sind daher sehr wartungsintensiv.

Hiervon ausgehend ist es die Aufgabe der vorliegenden Erfindung, ein Verfahren und eine Vorrichtung bereitzustellen, die auch stark verschmutzte Reinigungslaugen einfach und zuverlässig reinigen.

Erfindungsgemäß wird diese Aufgabe durch die Merkmale der Ansprüche 1 und 9 gelöst.

Da gemäß der vorliegenden Erfindung die Reinigungslauge erst von einem Hydrozyklonfilter 1 und anschließend von einem Feinfilter gefiltert wird, ergibt sich der Vorteil, dass die Filteranordnung nicht zusetzt. Die groben abgefilterten Partikel können einfach durch den Unterlauf des Hydrozyklonfilters entfernt werden, wobei die kleineren Partikel mit dem Feinfilter ausgefiltert werden können. Durch die Bauweise des Hydrozyklonfilters ist gewährleistet, dass es auch hier zu keinem Zusetzen des Filters bei der Grobfiltration kommt. Mit Hilfe des Feinfilters kann darüber hinaus erreicht werden, dass auch oberflächenaktive Stoffe (Tenside, Etikettenfarbe) herausgefiltert werden können.

Der Hydrozyklonfilter dient als Grobfilter und filtert vorzugsweise Teilchen einer Größe ≧ 150 µm aus. Der Feinfilter kann Teilchen einer Größe ≧ 2 µm, vorzugsweise ≧ 0,4 µm, ausfiltern. Bei einer solchen Filterleistung können wie bereits erwähnt auch noch oberflächenaktive Stoffe aus der verunreinigten Reinigungslauge entfernt werden, so dass das aufbereitete Filtrat z. B. auch als Spülbad verwendet werden kann. Als Feinfilter kann ein Druckgehäuse mit Keramikmembranen eingesetzt werden, die im Crossflow von der verunreinigten Reinigungslauge durchströmt werden. Hier kann der Feinfilter beispielsweise mindestens eine Multitube-Membranfilterkerze umfassen. Derartige Feinfilter können in der erfindungsgemäßen Anordnung einfach durch Spülen gereinigt werden.

Der Feinfilter kann einen Unfiltratstrom sowie einen Filtratstrom aufweisen, wobei das Unfiltrat dem Hydrozyklonfilter und/oder dem Feinfilter rückgeführt werden kann.

Das Filtrat aus dem Feinfilter kann dann erneut als Reinigungslauge verwendet werden.

Gemäß einer bevorzugten Ausführungsform wird als Reinigungslauge Hauptlauge aus einer Flaschenreinigungsmaschine aufbereitet und anschließend wieder der Hauptlauge, d. h. dem Hauptlaugenbad zugeführt. Bei dieser Ausführungsform kann die vom Hydrozyklon gefilterte Hauptlauge einem Feedbehälter zugeführt werden, bevor sie vom Feinfilter gefiltert wird. Der Feedbehälter dient zur Abpufferung der Aufkonzentrierung der Reinigungslauge aus dem Feinfilter. So wird gemäß einer bevorzugten Ausführungsform das Unfiltrat aus dem Feinfilter dem Feedbehälter rückgeführt.

Es ist vorteilhaft, wenn ein Teil des Filtrats der Hauptlauge aus dem Hydrozyklonfilter direkt wieder der Hauptlauge, d. h. dem Hauptlaugenbad, zugeführt wird und ein Teil dem Feinfilter zugeführt wird. Vorzugsweise werden zwischen 60 und 80 % des Filtrats aus dem Hydrozyklonfilter direkt der Hauptlauge zugeführt und entsprechend 20 bis 40 % des Filtrats aus dem Hydrozyklonfilter der Feinfiltration unterzogen. So reinigt man das Hauptlaugenbad mit einem großen Volumenstrom vor und zusätzlich wird noch ein kleiner Volumenstrom von dem Feinfilter filtriert. Somit wird die Hauptlauge ständig regeneriert, um die Reinigungswirkung beizubehalten. Es wird nur ein Teil feinfiltriert, da in dieser Kombination Tenside noch in der Hauptlauge verbleiben müssen, da sie hier für die Reinigung benötigt werden.

Gemäß einer anderen Ausführungsform kann als Reinigungslauge auch Nachlauge aus einer Flaschenreinigungsmaschine aufbereitet und anschließend wieder der Nachlauge, d. h. dem Nachlaugebad, zugeführt werden. Bei dieser Ausführungsform kann das aus dem Unterlauf des Hydrozyklonfilters kommende Schmutzwasser einem Vorreinigungsbad der Flaschenreinigungsmaschine zugeführt werden.

Das erfindungsgemäße Verfahren kann auch für Reinigungslaugen aus dem Sudhaus verwendet werden.

Die Erfindung wird nachfolgend anhand der folgenden Zeichnungen näher erläutert.
- Fig. 1: zeigt den schematischen Aufbau einer ersten Ausführungsform gemäß der vorliegenden Erfindung für die Hauptlauge einer Flaschenreinigungsanlage.
- Fig. 2: zeigt schematisch eine weitere Ausführungsform gemäß der vorliegenden Erfindung für die Nachlauge einer Flaschenreinigungsanlage.
- Fig. 3: zeigt schematisch den Aufbau eines Hydrozyklonfilters.
- Fig. 4: zeigt schematisch einen Schnitt durch einen Feinfilter.
- Fig. 5: zeigt einen Schnitt entlang der Linie I-I in Fig. 4.
- Fig. 6: zeigt in perspektivischer Darstellung eine Multitube-Membranfilterkerze.
- Fig. 7: zeigt schematisch den prinzipiellen Aufbau einer Flaschenreinigungsanlage.

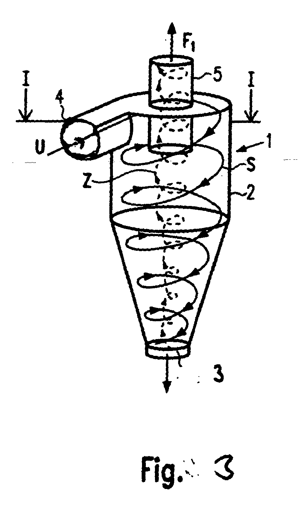

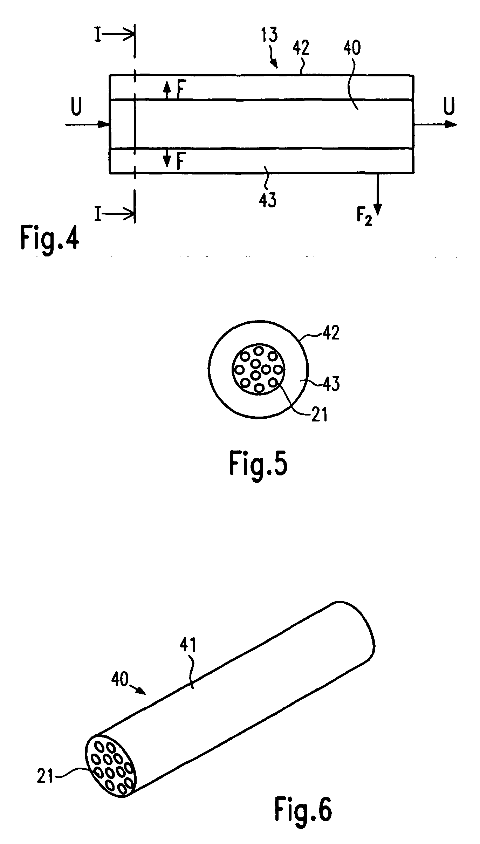

Gemäß der vorliegenden Erfindung werden zum Aufbereiten von in Brauereien anfallenden verunreinigten Reinigungslaugen 37, 28 ein Hydrozyklonfilter 1, wie er beispielsweise in Fig. 3 dargestellt ist, sowie ein Feinfilter 13 verwendet, wie beispielsweise in Fig. 4 bis 6 dargestellt.

Wie aus der Fig. 3 hervorgeht, weist der Hydrozyklonfilter 1 einen Hohlkörper 2 auf, an dessen oberem Ende ein Unfiltratzulauf 4 für verunreinigte Reinigungslauge 37, 28 vorgesehen ist. Der Unfiltratzulauf 4 weist ein Einlaufrohr auf, das tangential zum Hohlkörper 2 verläuft. Der Hohlkörper 2 ist in seinem oberen Bereich hohlzylindrisch ausgebildet und verläuft im unteren Bereich kegelförmig nach unten zu. Am unteren Ende des Hohlkörpers 2 befindet sich der Unterlauf 3, d. h. der Auslass für die groben Verunreinigungen in den Reinigungslaugen. Am oberen Ende kann sich, wie dargestellt, ein Tauchrohr befinden, das in den Hohlkörper 2 hineinragt und eine sogenannte Überlaufdüse (Wirbelsucher) bzw. Überlauf darstellt, die als Filtratauslass für das Filtrat F1 dient.

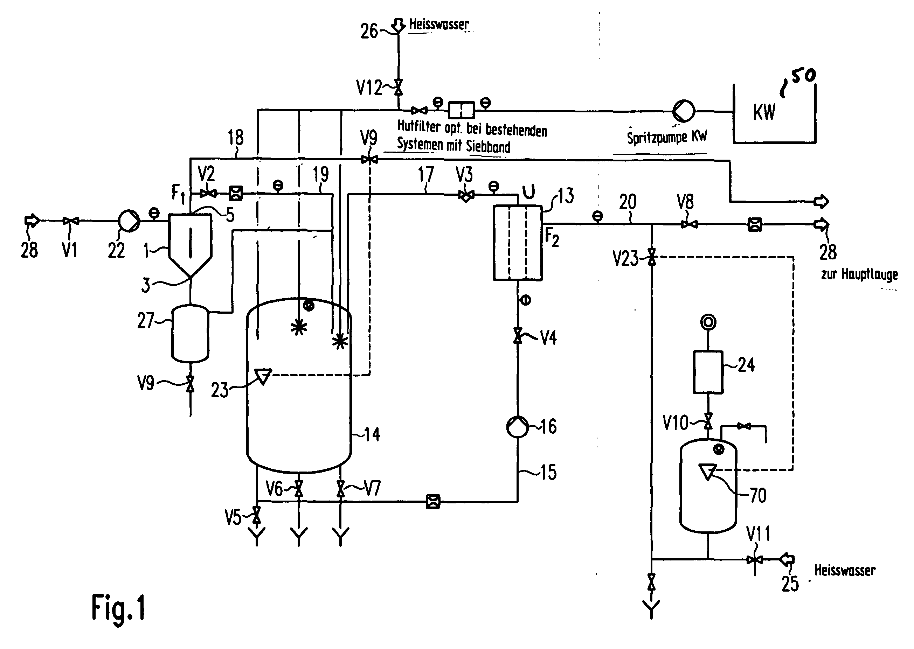

Der Hydrozyklonfilter 1 arbeitet wie folgt. Die verunreinigte Reinigungslauge 37, 28 wird über eine Pumpe mit hoher Geschwindigkeit in den Unfiltratzulauf 4 gepumpt und somit tangential in den zylindrischen Hohlkörper 2 geleitet. Die mit Druck über eine Pumpte tangential zugeführte Reinigungslauge wird an der Innenwand des Hohlkörpers 2 zu einer äußeren, abwärts gerichteten schraubenförmigen Umlaufströmung (Außenwirbel S) gezwungen. Durch eine Drosselwirkung im unteren konischen Teil werden vom Außenwirbel ständig Teile zu einer inneren aufwärts gerichteten Wirbelströmung Z (Innenwirbel) umgelenkt. Durch die Zentrifugalkraft sammeln sich die größeren und schwereren Partikel der Reinigungslauge an den Innenwänden des Hohlkörpers 2 und können am unteren Ende über den Unterlauf 3 ausgetragen werden. Der Innenwirbel steigt in der Kegelachse, d. h. der Längsachse des Hohlkörpers 2 nach oben und kann dort als Filtrat F1 abgenommen werden. In der Fig. 1 ist der Hohlkörper 2 im unteren Bereich kegelförmig ausgebildet. Die Vorrichtung kann jedoch auch hohlzylindrisch mit Flachboden ausgebildet sein.

Der Hydrozyklonfilter dient als Grobfilter und filtert z.B. Teilchen einer Teilchengröße ≧ 150 µm aus. Nachgeschaltet ist dem Hydrozyklonfilter 1 ein Feinfilter 13, der feine Teilchen einer Größe ≧ 2 µm, vorzugsweise ≧ 0,4 µm ausfiltert.

Als Feinfilter 13 kann ein Druckgehäuse mit Keramikmembranen vorgesehen sein, die im Crossflow von der verunreinigten Reinigungslauge durchströmt werden. In Fig. 4 bis 6 ist eine mögliche Ausführungsform eines derartigen Feinfilters 13 gezeigt, wobei der Feinfilter hier ein Druckgehäuse 42 sowie mindestens eine Multitube-Membranfilterkerze 40 umfasst. Zwischen der Membranfilterkerze 40 und dem Druckgehäuse 42 bildet sich ein Filtratraum 43 aus. Die Multitube-Membranfilterkerze 40 weist wie in Fig. 5 und 6 näher dargestellt ist, mehrere Röhren 21 auf, die sich in Längsrichtung durch die Filterkerze 40 erstrecken. Die Filterkerze kann aus keramischem Material ausgebildet sein, wobei auf der Röhreninnenseite eine wenige Mikrometer starke Membranschicht angeordnet sein kann. Bei der Filtration tritt Unfiltrat, das aus dem Hydrozyklonfilter 1 kommt, in die Röhren 21 der Filterkerze 40, tritt durch die Membran in den Röhren 21 sowie durch die Keramik der Filterkerze 40 und verlässt die Oberfläche 41 der Filterkerze 40 als Filtrat und tritt in den Filtratraum 43, wo das Filtrat F2 abgezogen werden kann. Das Unfiltrat U, das durch die Röhren 21 fließt, verlässt den Feinfilter 13 und kann beispielsweise erneut dem Unfiltratzulauf 4 des Hydrozyklonfilters 1 zugeführt werden oder aber auch wieder dem Feinfilter zugeführt werden.

Die Kombination aus dem Hydrozyklonfilter 1 und dem Feinfilter 13 ermöglicht, dass auch stark verschmutzte Reinigungslaugen zuverlässig aufbereitet werden können, ohne dass die Filteranordnung zusetzt.

Die erfindungsgemäße Vorrichtung und das erfindungsgemäße Verfahren können beispielsweise für Reinigungslaugen aus dem Sudhaus oder dem Flaschenkeller verwendet werden.

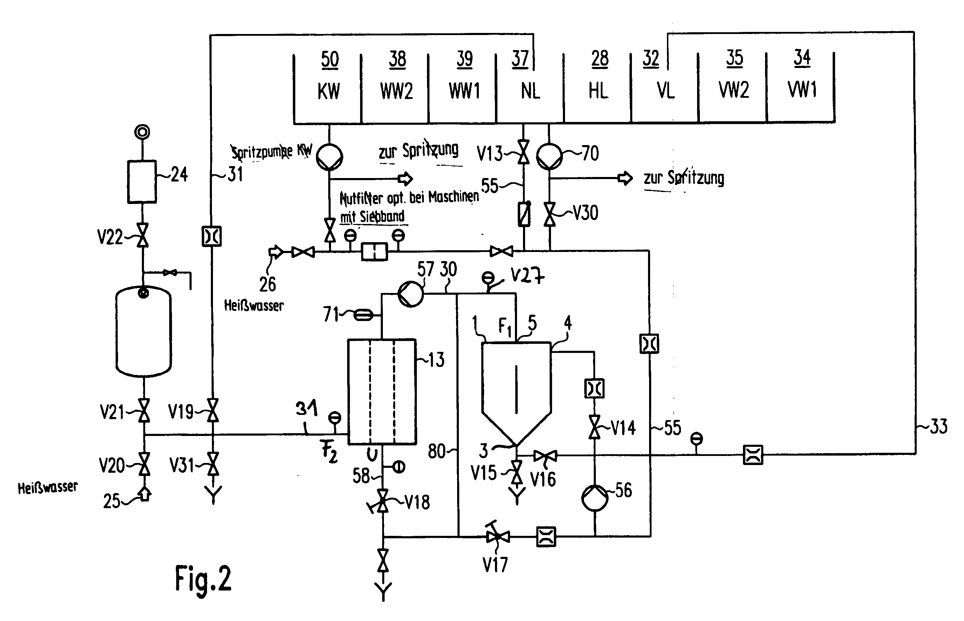

Da erfindungsgemäße Verfahren sowie die erfindungsgemäße Vorrichtung werden nachfolgend den Zusammenhang mit der in Fig. 7 gezeigten Flaschenreinigungsanlage näher erläutert, wobei die Fig. 1 das Aufbereiten der Hauptlauge und Fig. 2 das Aufbereiten der Nachlauge zeigt.

Fig. 7 zeigt eine Einendreinigungsmaschine, bei der sich der Flascheneinschub 53 und die Flaschenabgabe 54 an der gleichen Seite befinden. Nach dem Einschub der Flaschen befindet sich zunächst eine Restentleerung 52. Anschließend durchlaufen die Flaschen nacheinander die Vorweiche 34, die Vorspritzung 36 und die Vorweiche 35 und werden dann in das Vorlaugebad 32 befördert. Daraufhin erfolgt die längste und intensivste Behandlung im Hauptlaugebad 28, wo sich der meiste Schmutz und Verunreinigungen lösen. Das betrifft auch die Etiketten und den Etikettenleim. Die Reinigungsanlage kann entsprechende Einrichtungen 90 zum Entfernen der Etiketten aufweisen.

In einem Nachlaugebad 37A, 37B werden die Flaschen noch einmal äußerlich nachgereinigt und mit einer Spritzeinrichtung 38, 39 mit Warmwasser abgespritzt. Anschließend erfolgt noch eine Behandlung mit Kaltwasser und Frischwasser 50, 51.

Bei der in Fig. 7 gezeigten Flaschenreinigungsanlage 100 ist die erfindungsgemäße Vorrichtung nicht dargestellt. Die erfindungsgemäße Vorrichtung zur Aufbereitung der Hauptlauge 28 ist in Fig. 1 dargestellt. Die in Fig. 1 gezeigte Vorrichtung ist mit dem in Fig. 7 gezeigten Laugebad zum Zuführen der Hauptlauge 28 über ein entsprechendes Leitungssystem verbunden. Die Vorrichtung weist weiter den Hydrozyklonfilter 1 auf, der vorab in Zusammenhang mit der Fig. 3 näher erläutert wurde. Der Unterlauf 3 ist hier mit einer Sedimentationseinrichtung 27, die ein Ablassventil V9 aufweist, verbunden. Der Überlauf 5 des Hydrozyklonfilters 1 ist einerseits über das Ventil V2 mit einer Leitung 19 verbunden, die in einen Feedbehälter 14 führt, um Filtrat F1 aus dem Hydrozyklonfilter 1 in den Feedbehälter 14 zu leiten. Der Überlauf 5 ist darüber hinaus auch mit einer Leitung 18 verbunden, die ein Regelventil V9 aufweisen kann, und Filtrat F1 aus dem Hydrozyklonfilter 1 direkt wieder dem Hauptlaugebad ohne Feinfiltration zuführt, in der Leitung vom Hauptlaugebad zu dem Hydrozyklonfilter 1 ist eine Pumpe 22 vorgesehen.

Der Feedbehälter 14 ist an seinem unteren Ende über eine Leitung 15 einer Pumpe 16 und einem Ventil V4 mit dem Feinfilter 13 verbunden, wobei das Unfiltrat aus dem Feinfilter 13 über eine Leitung 17 und dem Ventil V3 dem Feedbehälter 14 rückgeführt werden kann. Der Feedbehälter 14 weist darüber hinaus Ablassventile V5, V6, V7 auf. Über die Heißwasserzufuhr 36 und das Ventil V12 kann Heißwasser in den oberen Bereich des Feedbehälters 14 eingebracht werden. Der Feedbehälter 14 weist weiter einen Füllstandssensor 23 auf.

Das Filtrat F₂ aus dem Feinfilter 13 kann über eine Leitung 20 der Hauptlauge 28 zugeführt werden. Darüber hinaus weist die Vorrichtung eine Drucklufteinrichtung 24 sowie eine Heißwassereinrichtung 25 mit entsprechenden Ventilen V10 und V11 auf, die zum Rückspülen und Reinigen wie nachfolgend näher erläutert wird dienen.

Das in Fig. 1 gezeigte Ausführungsbeispiel arbeitet wie folgt.

Vor dem Betrieb muss das Filtersystem zunächst gefüllt werden. Dazu wird die Pumpe 22 eingeschaltet. Dabei ist das Regelventil V9 geschlossen und das Ventil V2 geöffnet. Die Pumpe 22 pumpt permanent Hauptlauge 28 aus dem Hauptlaugebad in den Hydrozyklonfilter 1, wobei das Filtrat F1 aus dem Überlauf 5 über die Leitung 19 dem Feedbehälter 14 zugeführt wird. Auch aus der Sedimentationseinrichtung 27 kann Lauge in den Feedbehälter 14 geführt werden, da diese relativ klar ist, da sich grobe Partikel im Sedimentationsbehälter absetzen. Der Füllvorgang erfolgt solange, bis über einen Füllstandssensor 23 gemeldet wird, dass ein bestimmtes Niveau erreicht worden ist.

Nach Erreichen dieses Niveaus erfolgt der eigentliche Betrieb der in Fig. 1 gezeigten Vorrichtung. Bei Erreichen des bestimmten Niveaus wird das Ventil V9 geöffnet, ebenso sind die Ventile V2, V4 sowie V8 geöffnet. Hauptlauge 28 wird über die Pumpe 22 in den Hydrozyklonfilter 1 gepumpt, der grobe Partikel ausfiltert und über den Unterlauf 3 in die Sedimentationseinrichtung 27 abführt. Die schweren Partikel setzen sich in der Sedimentationseinrichtung 27 ab und relativ klare Laugenflüssigkeit befindet sich im oberen Bereich der Sedimentationseinrichtung. Diese kann dem Feedbehälter 14 zugeführt werden. Das grobgefilterte Filtrat F1 verlässt über den Überlauf 5 den Hydrozyklonfilter 1, wobei ein großer grobgereinigter Volumenstrom über die Leitung 18 direkt wieder zum Hauptlaugebad geführt wird. Ein kleiner Volumenstrom wird vom Feinfilter 13 feinfiltriert. Dabei wird das grobfiltrierte Filtrat F1 über die Leitung 19 dem Feedbehälter 14 zugeführt und von dem Feedbehälter 14 über die Leitung 15, die Pumpe 16 und das Ventil V4 dem Feinfilter 13 zugeführt, der wie in Zusammenhang mit den Fig. 3 bis 6 beschrieben, ein Feinfiltrat F2 erzeugt, das über die Leitung 20 und das Ventil V8 dem Hauptlaugebad zugeführt wird. Der Hydrozyklonfilter 1 sowie die Einstellung der entsprechenden Ventile etc. ist derart ausgelegt, dass etwa 3/4 (60 bis 80 %) der von ihm gereinigten Menge an Reinigungslauge, d. h. hier Hauptlauge, wieder direkt in die Hauptlauge 28 läuft. Man reinigt so das Hauptlaugebad mit einem großen Volumenstrom vor und zusätzlich wird noch der kleinere Volumenstrom von dem Feinfilter 13 feinfiltriert. Somit kann die Hauptlauge ständig regeneriert und die Reinigungswirkung beibehalten werden. Da nur ein kleiner Teil feinfiltriert wird, können hier die Tenside in der Hauptlauge verbleiben, da die für die Reinigung noch benötigt werden. Es werden hier etwa 1/4 (bzw. 20 bis 40 %) des Grobfiltrats F1 der Feinfiltration zugeführt.

Der Feinfilter 13, weist wie zuvor beschrieben, einen Unfiltratstrom auf, wobei das Unfiltrat dann erneut über die Ventile V3 und die Leitung 17 dem Feedbehälter 14 zugeführt werden kann, um dann erneut einer Feinfiltration unterzogen zu werden.

Im Betrieb der Vorrichtung werden beispielsweise 11 m³ pro Stunde an Hauptlauge 28 dem Hydrozyklonfilter 1 zugeführt, 0,5 bis 1 m³ pro Stunde über den Unterlauf des Hydrozyklonfilter 1 der Sedimentationseinrichtung 27 zugeführt, 7 bis 8 m³ pro Stunde über die Leitung 18 der Hauptlauge 28 zugeführt und etwa 2 bis 3 m³ pro Stunde an Feinfiltrat F2 über die Leitung 20 der Hauptlauge 28 zugeführt. Über die Leitung 19 werden etwa 10 m³ pro Stunde dem Feedbehälter 14 zugeführt.

Zum Reinigen der Vorrichtung wird zunächst die Vorrichtung rückgespült, wobei über die Drucklufteinrichtung 24 und entsprechende Schaltung der Ventile die Rohrleitungen und Filter entleert werden und mit Heißwasser über eine Heißwasserzuführung 25 und 26 gespült werden.

Fig. 2 zeigt die Vorrichtung zum Aufbereiten von Nachlauge 37 aus dem Nachlaugebad der in Fig. 7 gezeigten Flaschenreinigungsanlage 100. Die Vorrichtung weist eine Leitung 55 und ein entsprechendes Ventil V13 auf, über die die Nachlauge von Nachlaugebad dem Hydrozyklonfilter 1 zugeführt werden kann. Weiter weist die Vorrichtung eine Pumpe 56 auf, die die Nachlauge 37 in den Hydrozyklonfilter 1 pumpt. Der Überlauf 5, aus dem das Grobfiltrat F1 aus dem Hydrozyklonfilter 1 austritt, ist über eine Leitung 30 und eine Pumpe 57 mit dem Feinfilter 13 verbunden. Wie vorab in Zusammenhang mit den Fig. 4 bis 6 beschrieben, kann hier das Unfiltrat aus dem Filter 13 über eine Leitung 58 erneut dem Hydrozyklonfilter 1 zugeführt werden. Das Feinfiltrat F2 kann über eine Leitung 31 und Ventil V19 erneut dem Nachlaugebad mit der Nachlauge 37 rückgeführt werden. Weiter weist die Vorrichtung eine Drucklufteinrichtung 24 zum Rückspülen und eine Heißwasserzuführung 25, 26 zum Reinigen auf.

Der Unterlauf des Hydrozyklonfilters 3 ist über eine Rückführleitung 33 mit dem Vorlaugebad 32 verbunden. Auch hier ist wie zuvor schon beschrieben der Hydrozyklon für die Grobfiltration (bis etwa 150 µm) zuständig, während der Feinfilter 13 (bis etwa 0,4 µm) die Feinfiltration übernimmt. Die Verschaltung von Hydrozyklonfilter 1 und Feinfilter 13 erfolgt hier ohne zusätzlichen Feedbehälter 14. Die im Feinfilterkreislauf stattfindende Aufkonzentrierung von Verschmutzung wird durch die ständige Abscheidung von Flüssigkeit aus dem Unterlauf 3 des Hydrozyklonfilters in Grenzen gehalten, so dass der zur Abpufferung der Aufkonzentrierung benötigte Feedbehälter entfallen kann.

Die hier beschriebene Vorrichtung arbeitet wie folgt. Zunächst wird das Filtersystem gefüllt. Beim Füllen sind die Ventile V27, V14, Regelventile V18, V17 voll geöffnet und die Pumpen 56 und 57 ausgeschaltet und die Ventile V15 und V16 geschlossen. Über die Pumpe 70 und das nachfolgende Ventil oder aber auch über die Leitung 55 mit geöffnetem Ventil V13 kann zunächst eine Befüllung des Filtersystems mit Nachlauge 37 erfolgen, bis die Ringsonde 71 Flüssigkeit meldet, worauf z.B. das Ventil V30 geschlossen wird.

Im Betrieb der Vorrichtung wird dann das Ventil V13 geöffnet, die Pumpen 56 und 57 werden eingeschaltet, das Ventil 19 sowie das Ventil V16 ist geöffnet, die Ventile V21, V20 und V31 sind geschlossen und das Regelventil V18 ist auf einen Wert eingestellt, so dass sich durch ein eingestelltes Druckniveau in der Membran des Feinfilters ein möglichst großer Volumenstrom ergibt, wobei das Regelventil V17 auf einen Wert eingestellt ist, dass ein vorbestimmter Durchfluss beispielsweise 10 m³ pro Stunde durch die Pumpe 56 angesaugt werden können.

Im Betrieb wird Nachlauge 37 aus dem Nachlaugebad, das in Fig. 7 dargestellt ist, über das Ventil 13 und die Leitung 55 über die Pumpe 56 in den Hydrozyklonfilter 1 mit hoher Geschwindigkeit tangential eingeleitet. Das Filtrat F1 (Teilchengröße bis etwa 150 µm) wird über die Leitung 30 von der Pumpe 57 in den Feinfilter 13 gepumpt, um hier wie vorab beschrieben einer Feinfiltration unterzogen zu werden. Das Feinfiltrat F2, das eine Teilchengröße ≤ 2 µm, vorzugsweise 0,4 µm aufweist, wird über die Leitung 31 erneut dem Nachlaugebad mit der Nachlauge 37 rückgeführt. Das aus dem Feinfilter 13 kommende Unfiltrat U kann über die Leitung 58 von der Pumpe 56 erneut über den Unfiltratzulauf 4 dem Hydrozyklonfilter 1 zugeführt werden. Ein Teil des Unfiltrats aus dem Feinfilter 13 kann auch über die Leitung 80 von der Pumpe 57 erneut der Feinfiltration zugeführt werden. Somit kann ein Teil des Unfiltrats U aus dem Feinfilter 13 erneut dem Hydrozyklonfilter 1 zugeführt werden und ein Teil erneut dem Feinfilter 13.

Das Schmutzwasser aus dem Unterlauf 3 des Hydrozyklonfilters 1 kann über die Leitung 33 der Vorlauge 32 zugeführt werden und muss nicht verworfen werden. Durch die erfindungsgemäße Filtration der Nachlauge wird ermöglicht, dass im Nachlaugebad die Flaschen mit möglichst sauberer Flüssigkeit ausgespült werden und die nachfolgenden Spülzonen so vor dem Eintrag von Schmutz geschützt werden. Mit Hilfe des Feinfilters, d. h. mit Hilfe der Mikrofiltration kann erreicht werden, dass auch noch vorhandene oberflächenaktive Stoffe (Tenside, Etikettenfarbe) herausgefiltert werden, so dass das Produkt Flasche am Ende der Reinigung eine höhere Oberflächenspannung besitzt, was zu einer höheren Produktqualität führt.

Mit Hilfe der Drucklufteinrichtung 24 können durch Schaltung der entsprechenden Ventile (V13 bis V22, V30, V31) die Flüssigkeiten aus den Leitungen rückgespült werden und über die Heißwasserversorgung 25, 26 können die Leitungen auf einfache Weise gespült werden.

Durch die erfindungsgemäße Vorrichtung, die einen Hydrozyklonfilter 1 sowie einen Feinfilter, d. h. Mikrofilter 13 umfasst, ist es möglich, kontinuierlich Reinigungslauge zu filtrieren, ohne dass die Filter zusetzen. Die Filteranordnung kann durch einfaches Rückspülen und Durchspülen gereinigt werden. Dadurch, dass hier ein Feinfilter mit einem Unfiltratstrom und einem Druckgehäuse mit Keramikmembranen umfasst, die im Crossflow durchströmt werden, kann auch der Feinfilter durch einfaches Durchspülen leicht gereinigt werden.

## Patentansprüche

1. Verfahren zum Aufbereiten von bei der Lebensmittelherstellung insbesondere in Brauereien anfallenden verunreinigten Reinigungslaugen (37, 28), **dadurch gekennzeichnet, dass** die Reinigungslauge (37, 28) erst von einem Hydrozyklonfilter (1) und anschließend von einem Feinfilter (13) gefiltert wird,
als Reinigungslauge Hauptlauge (28) aus einer Flaschenreinigungsmaschine (100) aufbereitet und anschließend wieder der Hauptlauge (28) zugeführt wird,
und dass ein Teil des Filtrats (F₁) der Hauptlauge (28) aus dem Hydrozyklonfilter (1) direkt wieder der Hauptlauge (28) zugeführt wird und ein Teil dem Feinfilter (13) zugeführt wird.

2. Verfahren nach Anspruch 1, **dadurch gekennzeichnet, dass** der Hydrozyklonfilter (1) Teilchen einer Größe ≧ 150 µm ausfiltert.

3. Verfahren nach Anspruch 1 oder 2, **dadurch gekennzeichnet, dass** der Feinfilter (13) Teilchen einer Größe ≧ 2 µm, vorzugsweise ≧ 0,4 µm ausfiltert.

4. Verfahren nach mindestens einem der vorhergehenden Ansprüche, **dadurch gekennzeichnet, dass** der Feinfilter (13) einen Unfiltratstrom sowie einen Filtratstrom aufweist, wobei das Unfiltrat (U) dem Hydrozyklonfilter (1) und/oder dem Feinfilter (13) rückgeführt wird.

5. Verfahren nach mindestens einem der vorhergehenden Ansprüche, **dadurch gekennzeichnet, dass** das Filtrat (F₂) aus dem Feinfilter (13) erneut als Reinigungslauge (37, 28) verwendet wird.

6. Verfahren nach Anspruch 1, **dadurch gekennzeichnet, dass** die vom Hydrozyklon (1) gefilterte Hauptlauge (28) einem Feedbehälter (14) zugeführt wird, bevor sie vom Feinfilter (13) gefiltert wird.

7. Verfahren nach Anspruch 6, **dadurch gekennzeichnet, dass** das Unfiltrat aus dem Feinfilter (13) dem Feedbehälter (14) rückgeführt wird.

8. Verfahren nach Anspruch 1, **dadurch gekennzeichnet, dass** zwischen 60 und 80 % des Filtrats (F₁) aus dem Hydrozyklonfilter (1) direkt der Hauptlauge (28) zugeführt wird und entsprechend 20 bis 40 % des Filtrats (F₁) aus dem Hydrozyklon (1) der Feinfiltration unterzogen wird.

9. Vorrichtung zum Aufbereiten von bei der Lebensmitttelherstellung insbesondere in Brauereien anfallenden Reinigungslaugen (37, 28) **dadurch gekennzeichnet, dass**
die Vorrichtung einen Hydrozyklonfilter (1) sowie einen Feinfilter (13) umfasst
die Vorrichtung als Reinigungslauge Hauptlauge (28) aus einer Flaschenreinigungsmaschine (100) aufbereitet und eine Rückleitung (20) umfasst, um die aufbereitete Lauge wieder der Hauptlauge (28) zuzuführen,
und dass die Vorrichtung eine Einrichtung (18, V9) umfasst, die einen Teil des Filtrats der Hauptlauge (28) aus dem Hydrozyklonfilter (1) direkt wieder der Hauptlauge (28) zuführt und einen Teil dem Feinfilter (13) zuführt.

10. Vorrichtung nach Anspruch 9, **dadurch gekennzeichnet, dass** der Hydrozyklonfilter (1) derart gestaltet ist, dass er Teilchen einer Größe ≧ 150 µm ausfiltert.

11. Vorrichtung nach einem der Ansprüche 9 oder 10, **dadurch gekennzeichnet, dass** der Feinfilter (13) eine Porengröße aufweist, dass Teilchen einer Größe ≧ 2 µm, vorzugsweise ≧ 0,4 µm ausgefiltert werden.

12. Vorrichtung nach mindestens einem der Ansprüche 9 bis 11, **dadurch gekennzeichnet, dass** der Feinfilter (13) ein Druckgehäuse (42) mit Keramikmembranen (40) umfasst, die im Crossflow von der verunreinigten Reinigungslauge (37, 28) durchströmt werden.

13. Vorrichtung nach Anspruch 12, **dadurch gekennzeichnet, dass** der Feinfilter (13) mindestens eine Multitube-Membranfilterkerze umfasst.

14. Vorrichtung nach mindestens einem der Ansprüche 9 bis 13, **dadurch gekennzeichnet, dass** der Feinfilter (13) einen Unfiltratstrom sowie einen Filtratstrom aufweist, und eine Rückführung (17) zum Rückführen des Unfiltrats in den Hydrozyklonfilter (1) und/oder Feinfilter (13) umfasst.

15. Vorrichtung nach mindestens einem der Ansprüche 9 bis 14, **dadurch gekennzeichnet, dass** die Vorrichtung eine Rückleitung (17, 31) umfasst zum Rückleiten der gefilterten Reinigungslauge (37, 28).

16. Vorrichtung nach Anspruch 9, **dadurch gekennzeichnet, dass** die Vorrichtung einen Feedbehälter (14) umfasst, der zwischen Hydrozyklonfilter (1) und Feinfilter (13) angeordnet ist.

17. Vorrichtung nach Anspruch 9, **dadurch gekennzeichnet, dass** die Einrichtung derart konfiguriert ist, dass zwischen 60 und 80 % des Filtrats aus dem Hydrozyklonfilter (1) direkt der Hauptlauge (28) zugeführt werden und entsprechend 20 bis 40 % des Filtrats aus dem Hydrozyklonfilter (1) dem Feinfilter (13) zugeführt werden.

18. Flaschenreinigungsmaschine (100) mit einem Vorlaugebad (32), einem Hauptlaugebad (28) sowie einem Nachlaugebad (37), die zum Aufbereiten von Reinigungslauge eine Vorrichtung nach mindestens einem der Ansprüche 9 bis 17 umfasst.

## Claims

1. Process for the treatment of contaminated cleaning lyes (37, 28) occurring in food manufacture, especially in breweries, **characterized in that** the cleaning lye (37, 28) is first filtered by a hydrocyclone filter (1) and subsequently filtered by a fine filter (13), main lye (28) from a bottle cleaning machine (100) is treated as the cleaning lye and is subsequently returned to the main lye (28), and **in that** part of the filtrate (F₁) of the main lye (28) is returned directly from the hydrocyclone filter (1) to the main lye (28) and part is fed to the fine filter (13).

2. Process according to Claim 1, **characterized in that** the hydrocyclone filter (1) filters out particles of a size ≥ 150 µm.

3. Process according to Claim 1 or 2, **characterized in that** the fine filter (13) filters out particles of a size ≥ 2 µm, preferably ≥ 0.4 µm.

4. Process according to at least one of the preceding claims, **characterized in that** the fine filter (13) has an unfiltrate stream and a filtrate stream, the unfiltrate (U) being returned to the hydrocyclone filter (1) and/or the fine filter (13).

5. Process according to at least one of the preceding claims, **characterized in that** the filtrate (F₂) from the fine filter (13) is re-used as cleaning lye (37, 28).

6. Process according to Claim 1. **characterized in that** the main lye (28) filtered by the hydrocyclone (1) is fed to a feed tank (14) before it is filtered by the fine filter (13).

7. Process according to Claim 6, **characterized in that** the unfiltrate from the fine filter (13) is returned to the feed tank (14).

8. Process according to Claim 1, **characterized in that** between 60 and 80% of the filtrate (F₁) from the hydrocyclone filter (1) is fed directly to the main lye (28) and, correspondingly, 20 to 40% of the filtrate (F₁) from the hydrocyclone (1) is subjected to fine filtration.

9. Apparatus for the treatment of cleaning lyes (37, 28) occurring in food manufacture, especially in breweries, **characterized in that** the apparatus comprises a hydrocyclone filter (1) and a fine filter (13), the apparatus treats main lye (28) from a bottle cleaning machine (100) as cleaning lye and comprises a return line (20), in order to return the treated lye to the main lye (28), and **in that** the apparatus comprises a device (18, V9), which returns part of the filtrate of the main lye (28) from the hydrocyclone filter (1) directly to the main lye (28) and feeds part to the fine filter (13).

10. Apparatus according to Claim 9, **characterized in that** the hydrocyclone filter (1) is designed in such a way that it filters out particles of a size ≥ 150 µm.

11. Apparatus according to either of Claims 9 and 10, **characterized in that** the fine filter (13) has a pore size such that particles of a size ≥ 2 µm, preferably ≥0.4 µm, are filtered out.

12. Apparatus according to at least one of Claims 9 to 11, **characterized in that** the fine filter (13) comprises a pressure housing (42) with ceramic membranes (40), which are flowed through by the contaminated cleaning lye (37, 28) in crossflow.

13. Apparatus according to Claim 12, **characterized in that** the fine filter (13) comprises at least one multitube membrane filter cartridge.

14. Apparatus according to at least one of Claims 9 to 13, **characterized in that** the fine filter (13) has an unfiltrate stream and a filtrate stream, and comprises a return (17) for returning the unfiltrate into the hydrocyclone filter (1) and/or fine filter (13).

15. Apparatus according to at least one of Claims 9 to 14, **characterized in that** the apparatus comprises a return line (17, 31) for returning the filtered cleaning lye (37, 28).

16. Apparatus according to Claim 9, **characterized in that** the apparatus comprises a feed tank (14), which is arranged between the hydrocyclone filter (1) and the fine filter (13).

17. Apparatus according to Claim 9, **characterized in that** the device is configured in such a way that between 60 and 80% of the filtrate from the hydrocyclone filter (1) is fed directly to the main lye (28) and, correspondingly, 20 to 40% of the filtrate from the hydrocyclone filter (1) is fed to the fine filter (13).

18. Bottle cleaning machine (100) with a preliminary lye bath (32), a main lye bath (28) and a final lye bath (37), which for the treatment of cleaning lye comprises an apparatus according to at least one of Claims 9 to 17.

## Revendications

1. Procédé de traitement de lessives de nettoyage polluées (37, 28) produites dans la fabrication de produits alimentaires, en particulier dans des brasseries, **caractérisé en ce que** la lessive de nettoyage (37, 28) est filtrée d'abord par un filtre hydrocyclone (1) puis par un filtre fin (13), de la lessive principale (28) d'une machine de lavage de bouteilles (100) est traitée en tant que lessive de nettoyage puis renvoyée dans la lessive principale (28), et **en ce qu'**une partie du filtrat (F₁) de la lessive principale (28) est renvoyée directement du filtre hydrocyclone (1) dans la lessive principale (28) et une partie est renvoyée dans le filtre fin (13).

2. Procédé suivant la revendication 1, **caractérisé en ce que** le filtre hydrocyclone (1) filtre des particules d'une grosseur ≥ 150 µm.

3. Procédé suivant l'une des revendications 1 et 2, **caractérisé en ce que** le filtre fin (13) filtre des particules d'une grosseur ≥ 2 µm, de préférence ≥ 0,4 µm.

4. Procédé suivant l'une au moins des revendications précédentes, **caractérisé en ce que** le filtre fin (13) présente un courant de non filtrat ainsi qu'un courant de filtrat, le non filtrat (U) étant renvoyé dans le filtre hydrocyclone (1) et/ou dans le filtre fin (13).

5. Procédé suivant l'une au moins des revendications précédentes, **caractérisé en ce que** le filtrat (F₂) du filtre fin (13) est réutilisé en tant que lessive de nettoyage (37, 28).

6. Procédé suivant la revendication 1, **caractérisé en ce que** la lessive principale (28) filtrée par le filtre hydrocyclone (1) est renvoyée dans un récipient de retour (14), avant d'être filtrée par le filtre fin (13).

7. Procédé suivant la revendication 6, **caractérisé en ce que** le non filtrat du filtre fin (13) est renvoyé dans le récipient de retour (14).

8. Procédé suivant la revendication 1, **caractérisé en ce qu'**entre 60 et 80% du filtrat (F₁) du filtre hydrocyclone (1) sont renvoyés directement dans la lessive principale (28) et en conséquence 20 à 40% du filtrat (F₁) du filtre hydrocyclone (1) sont soumis à la filtration fine.

9. Dispositif de traitement de lessives de nettoyage (37, 28) produites dans la fabrication de produits alimentaires, en particulier dans des brasseries, **caractérisé en ce que** le dispositif comprend un filtre hydrocyclone (1) ainsi qu'un filtre fin (13), le dispositif traite, en tant que lessive de nettoyage, de la lessive principale (28) provenant d'une machine de lavage de bouteilles (100) et comprend une conduite de retour (20), pour renvoyer la lessive traitée dans la lessive principale (28), et **en ce que** le dispositif comprend un équipement (18, V9), qui renvoie une partie du filtrat de la lessive principale (28) du filtre hydrocyclone (1) directement dans la lessive principale (28) et une partie dans le filtre fin (13).

10. Dispositif suivant la revendication 9, **caractérisé en ce que** le filtre hydrocyclone (1) a une configuration telle qu'il filtre des particules d'une grosseur ≥ 150 µm.

11. Dispositif suivant l'une des revendications 9 et 10, **caractérisé en ce que** le filtre fin (13) présente une grosseur de pores telle que des particules d'une grosseur ≥ 2 µm, de préférence ≥ 0,4 µm, sont filtrées.

12. Dispositif suivant l'une au moins des revendications 9 à 11, **caractérisé en ce que** le filtre fin (13) comprend un boîtier sous pression (42) avec des membranes céramiques (40), qui sont balayées en écoulements croisés par la lessive de nettoyage (37, 28) polluée.

13. Dispositif suivant la revendication 12, **caractérisé en ce que** le filtre fin (13) comprend au moins une bougie filtrante à membrane multitube.

14. Dispositif suivant l'une au moins des revendications 9 à 13, **caractérisé en ce que** le filtre fin (13) présente un courant de non filtrat ainsi qu'un courant de filtrat, et comprend une conduite de retour (17) pour renvoyer le non filtrat dans le filtre hydrocyclone (1) et/ou dans le filtre fin (13).

15. Dispositif suivant l'une au moins des revendications 9 à 14, **caractérisé en ce que** le dispositif comprend une conduite de retour (17, 31) pour renvoyer la lessive de nettoyage (37, 28) filtrée.

16. Dispositif suivant la revendication 9, **caractérisé en ce que** le dispositif comprend un récipient de retour (14), qui est disposé entre le filtre hydrocyclone (1) et le filtre fin (13).

17. Dispositif suivant la revendication 9, **caractérisé en ce que** l'équipement est configuré de telle sorte qu'entre 60 et 80% du filtrat provenant du filtre hydrocyclone (1) sont envoyés directement dans la lessive principale (28) et en conséquence 20 à 40% du filtrat du filtre hydrocyclone (1) sont envoyés dans le filtre fin (13).

18. Machine de lavage de bouteilles (100) avec un bain de pré-lessive (32), un bain de lessive principale (28) ainsi qu'un bain de post-lessive (37), qui comprend un dispositif suivant l'une au moins des revendications 9 à 17 pour le traitement de lessive de nettoyage.
